**Europäisches Patentamt**

**European Patent Office**

**Office européen des brevets**

(19)

(11) Veröffentlichungsnummer: **0 349 643**

**A1**

(12)

# EUROPÄISCHE PATENTANMELDUNG

Veröffentlicht nach Art. 158 Abs. 3 EPÜ

(21) Anmeldenummer: **88903123.3**

(51) Int. Cl.⁵: **B 05 B 13/02**

(22) Anmeldetag: **24.12.87**

Daten der zugrundeliegenden internationalen Anmeldung:

(86) Internationale Anmeldenummer:
**PCT/SU87/00153**

(87) Internationale Veröffentlichungsnummer:
**WO89/05693 (29.06.89 89/14)**

(43) Veröffentlichungstag der Anmeldung:
**10.01.90 Patentblatt 90/2**

(84) Benannte Vertragsstaaten:
**CH DE FR GB IT LI SE**

(71) Anmelder: **NAUCHNO-PROIZVODSTVENNOE OBIEDINENIE PO VYPUSKU MEKHANICHESKOGO SVAROCHNOGO OBORUDOVANIA (NPO 'VISP')**
**ul. Polevaya 24**
**Kiev, 252056(SU)**

(72) Erfinder: **TATUR, Alexandr Davidovich**
**ul. Parizhskoi Kommuny, 21-12**
**Kiev, 252001(SU)**

(72) Erfinder: **KILIMNIK, Oskar Gidalevich**
**ul. Stroitelei, 6a-70**
**Kiev, 252105(SU)**

(72) Erfinder: **YALKUT, Mark Borisovich**
**ul. Serafimovicha, 7-107**
**Kiev, 252152(SU)**

(72) Erfinder: **RUBIN, Eduard Abramovich**
**ul. Kashtanovaya, 12b-94**
**Kiev, 252222(SU)**

(72) Erfinder: **PONOMAREV, Viktor Grigorievich**
**ul. I.Franko, 9-27**
**Kiev, 252030(SU)**

(72) Erfinder: **MIRCHEVSKY, Petr Nikolaevich**
**ul. Mechnikova, 22a-17**
**Kiev, 252021(SU)**

(72) Erfinder: **GURZHY, Ivan Kirillovich**
**ul. Oktyabrskoi revoljutsii, 25-16**
**Kiev, 252021(SU)**

(72) Erfinder: **KAREV, Alexandr Anatolievich**
**ul. Uralskaya, 6/1-4**
**Kiev, 252028(SU)**

(72) Erfinder: **BOGUSLAVSKY, Alexandr Moiseevich**
**pr. Pobedy, 21-74**
**Kiev, 252055(SU)**

(74) Vertreter: **Nix, Frank Arnold, Dr.**
**Kröckelbergstrasse 15**
**D-6200 Wiesbaden(DE)**

(54) **VORRICHTUNG ZUR GASOTHERMISCHEN BESCHICHTUNG VON DURCH EINEN ROTATIONSKÖRPER GEFORMTEN GEGENSTÄNDEN.**

(57) Die Vorrichtung zum Gaswärmebeschichten der Gegenstände vom Typ Rotationskörper hat eine Kammer (1), in welcher auf einem Grundrahmen (2) ein Spindelstock (3) mit einer Spindel (4) und ein Reitstock (5) mit einer laufenden, mit der Spindel (4) fluchtenden Spitze (6) angebracht sind, und einen Zerstäuber (9), der auf einer Führung (10) verschiebbar gelagert ist, wobei die laufende Spitze (6) des Reitstockes (5) mit einem Antrieb (12) zur axialen Verschiebung des Gegenstandes (13) zum Spindelstock (3) hin versehen ist und auf dem Grundrahmen (2) Rollen (14) angeordnet sind, die den zu bewegenden Gegenstand (13) unterstützen und mit je einer Einrichtung (15) zur Höhenverstellung und je einem schwenkbaren Schild (20) zum Abschirmen der Oberfläche (16) der Rolle (14) vor dem aufzusprühenden Material ausgestattet sind.

EP 0 349 643 A1

FIG.1

FIG.3

# VORRICHTUNG ZUM GASWÄRMEBESCHICHTEN DER GEGENSTÄNDE VOM TYP ROTATIONSKÖRPER

## Gebiet der Technik

Die Erfindung betrifft Mittel zum Oberflächenbeschichten von Gegenständen und bezieht sich auf eine Vorrichtung zum Gaswärmebeschichten der Gegenstände vom Typ Rotationskörper.

## Stand der Technik

Es ist bereits eine Vorrichtung zum Beschichten der Gegenstände vom Typ Rotationskörper (SU, A, 761 023) bekannt, welche sich aus einer Kammer, zwei Drehwerken zum Drehen des Gegenstandes, die mit auf die Oberfläche des Gegenstandes wirkenden Antriebsrollen versehen sind, Förderrollen zum Befördern des Gegenstandes in Axialrichtung und einem Zerstäuber zusammensetzt. Eines der Drehwerke zum Drehen des Gegenstandes ist längs der Gegenstandsachse verschiebbar gelagert. Jedes von den Drehwerken verfügt über je einen Einzelantrieb zum Anheben des Gegenstandes, welcher als Hydraulikzylinder ausgebildet ist; die Förderrollen sind mit einem Antrieb zu deren Drehen versehen. Diese Vorrichtung dient für das Beschichten von großformatigen Gegenständen, wie z.B. großdimensionierten Rohren, welche für das Einnehmen der Stellung zum Beschichten besonderer Fördermittel bedürfen.

Der Gegenstand, dessen Oberfläche für das Beschichten vorbehandelt wurde, wird auf die Förderrollen aufgelegt, wonach der Antrieb zum Drehen dieser Rollen betätigt wird, die dann den Gegenstand bis hin zum unbeweglichen Drehwerk zum Drehen des Gegenstandes transportieren und stoppen. Anschließend läßt man das andere Drehwerk zur gleichen Seite hin laufen und hält es im Bereich der hinteren Stirnseite des Gegenstandes an. Man schaltet die Antriebe zum Heben des Gegenstandes ein, wonach der Gegenstand von den Förderrollen abgehoben wird, die Antriebe der Drehwerke betätigt werden und die Oberfläche des Gegenstandes beschichtet wird.

Infolge dessen, daß beim Beschichten der Gegenstand auf den Rollen des Drehwerkes zum Drehen des Gegenstandes aufliegt und mit rotiert, bleibt der Teil der Oberfläche,

0349643

der während der Drehung in Wechselwirkung mit den Rollen steht, unbeschichtet. Während der Beschichtung befinden sich die unbeweglichen Förderrollen im Bereich des Zerstäubers und unterhalb von ihm, so daß auch auf die Wirkflächen der Rollen eine Schicht aufgetragen wird, wobei nur der dem Zerstäuber zugewandte Teil der Wirkflächen der Rollen beschichtet wird. Dies führt zur Entstehung von örtlichen Wülsten an den Wirkflächen der Förderrollen und beeinträchtigt deren Betriebssicherheit. Bei der axialen Beförderung des Gegenstandes auf den Förderrollen kommt es zur Beschädigung der Oberfläche des Gegenstandes, die vorher zum Auftragen einer Schicht behandelt wurde. Weil die Vorbereitung der Oberfläche zum Gaswärmebeschichten darin besteht, daß der Oberfläche eine Rauigkeit mit vorbestimmter Höhe der Rauhspitzen verliehen wird und Ölfilme auf der Oberfläche entfernt werden, bewirkt das Umsetzen des Gegenstandes auf den Förderrollen das Verschwinden der Rauhspitzen und das Auftauchen von Ölflecken auf Oberfläche des Gegenstandes. Das wirkt sich nachteilig auf die Güte des Gaswärmebeschichtens des Gegenstandes aus.

Es sei weiter angemerkt, daß die vorhandenen beiden hydraulischen Antriebe zum Anheben des Gegenstandes und der Antrieb zum Drehen der Förderrollen den konstruktiven Aufbau der Vorrichtung erschweren.

Es ist eine weitere Vorrichtung zum Gaswärmebeschichten der Gegenstände vom Typ Rotationskörper, Modell WSP der Fa. PLASMA TECHNIK AG, bekannt.

Diese Vorrichtung besteht aus einer Kammer, in welcher auf dem Grundrahmen ein Spindelstock mit einer Spindel und ein Reitstock mit einer laufenden, mit der Spindel fluchtenden Spitze angebracht sind, und einem Zerstäuber, der auf einer Führung verschiebbar angeordnet ist. Der Reitstock ist längs der Spindelachse verlagerbar. Die laufende Spitze des Reitstockes ist mit einem Handantrieb für deren Heranführung an das Körnerloch an der Stirnfläche des Gegenstandes und für deren Arretierung in axialer Stellung ausgerüstet.

Der Gegenstand wird in der Spindel des Spindelstockes von Hand angeordnet, wonach man die laufende Spitze ins Körnerloch an der hinteren Stirnfläche des Gegenstandes einführt und dann die laufende Spitze in dieser Stellung arretiert. Man betätigt den Antrieb zum Spindeldrehen, und der Zerstäuber, indem er sich auf der Führung verschiebt, trägt eine Schicht auf den umlaufenden Gegenstand auf.

Diese bekannte Vorrichtung hat nur begrenzte technologische Möglichkeiten, weil darin von Hand ein Gegenstand mit einer Masse von 20 kg angeordnet werden kann; bei der Anordnung von Gegenständen mit mehr als 20 kg Masse in dieser Vorrichtung - diese Gegenstände können von Hand nicht mehr eingebracht werden - ist eine Beschädigung der Oberfläche des Gegenstandes, die zum Beschichten vorbereitet ist, möglich, was die Güte der Beschichtung verschlechtert.

Offenbarung der Erfindung

Der Erfindung wurde die Aufgabe zugrunde gelegt, eine Vorrichtung zum Gaswärmebeschichten der Gegenstände von Typ Rotationskörper zu schaffen, deren konstruktive Auslegung es ermöglicht, die Zuführung eines Gegenstandes großer Masse zum Bearbeitungsbereich ohne Beschädigung seiner zum Beschichten vorbereiteter Oberfläche zu mechanisieren.

Diese Aufgabe wird dadurch gelöst, daß bei einer Vorrichtung zum Gaswärmebeschichten der Gegenstände vom Typ Rotationskörper, die eine Kammer, in welcher auf dem Grundrahmen ein Spindelstock mit einer Spindel und ein Reitstock mit einer laufenden, mit der Spindel fluchtenden Spitze angebracht sind, und einen auf einer Führung verschiebbar angeordneten Zerstäuber hat, erfindungsgemäß die laufende Spitze des Reitstockes einen Antrieb zur axialen Verschiebung des Gegenstandes zum Spindelstock hin besitzt und auf dem Grundrahmen Rollen angebracht sind, die den zu bewegenden Gegenstand unterstützen und mit je einer Einrichtung zur Höhenverstellung und je einem schwenkbaren Schild zum Abschirmen der Rollenoberfläche vor dem aufzusprühenden Material ausgestattet sind.

Es ist zweckmäßig, das schwenkbare Schild als hohlen Rotationskörper auszubilden, der aus zwei gleichen Ele-

- 4 -                                              0349643

menten besteht, welche an der Rollenachse symmetrisch angebracht sind und deren summarischer Winkel des Querschnittes mehr als 180° beträgt.

Es ist weiter sinnvoll, das schwenkbare Schild mit
zwei Schäkeln zu bestücken, die mittels eines gemeinsamen
Gelenkes mit einer federbelasteten Gabel, die in Wechselwirkung mit dem Gegenstand steht, verbunden sind, wobei jeder Schäkel am jeweiligen Element des schwenkbaren
Schildes angelenkt ist.

Es ist ebenfalls vorteilhaft, die abschirmende Oberfläche des schwenkbaren Schildes der mit dem Gegenstand
zusammenwirkenden Rollenoberfläche äquidistant zu gestalten.

Es ist auch zweckdienlich, auf die mit dem Gegenstand
zusammenwirkende Rollenoberfläche einen wasseranziehenden
Werkstoff, der die für das Beschichten vorbereitete Oberfläche des Gegenstandes schützt, aufzutragen.

Eine solche Ausführung der Vorrichtung zum Gaswärmebeschichten der Gegenstände vom Typ Rotationskörper ermöglicht ohne Handarbeit eine mit der Spindelachse fluchtende Anordnung des Gegenstandes und einen axialen Vorschub
des Gegenstandes zur Spindel, so daß sich die Leistung der
Hilfsoperationen bei Vorrichtungen zum Gaswärmebeschichten
der Gegenstände vom Typ Rotationskörper erhöht. Hierbei
wird es vermieden, daß die in der Kammer befindlichen Fördermittel mit beschichtet werden, so daß deren Funktionstüchtigkeit verbessert wird. Es wird außerdem eine mechanische
Beschädigung der Gegenstandsoberfläche, die für das Beschichten vorbereitet ist, sowie die Bildung von Fettflecken
auf ihr vermieden, was zur Erhöhung der Überzugsgüte beiträgt.

Kurzbeschreibung der Zeichnungen

Nachstehend ist die Erfindung anhand deren konkreter
Ausführungsbeispiele unter Bezugnahme auf die beigefügten Zeichnungen näher erläutert; in diesen zeigt

Fig. 1 eine erfindungsgemäße Vorrichtung zum Gaswärmebeschichten der Gegenstände vom Typ Rotationskörper, eine
Gesamtansicht;

Fig. 2 einen Reitstock in einen Schnitt mit einem Antrieb zur axialen Bewegung des Gegenstandes, gemäß der Erfindung;

Fig. 3 die erfindungsgemäße Vorrichtung zum Gaswärmebeschichten der Gegenstände vom Typ Rotationskörper im Schnitt nach der Linie III-III der Fig. 1, die untere Stellung der Rolle ist gezeigt;

Fig. 4 die gleiche Vorrichtung mit der unteren Stellung der Rolle, wobei der Durchmesser des Gegenstandes anders ist als der des Gegenstandes in Fig. 3, gemäß der Erfindung;

Fig. 5 die gleiche Vorrichtung mit der oberen Stellung der Rolle, gemäß der Erfindung;

Fig. 6 eine Rolle mit einem schwenkbaren Schild bei oberer Stellung der Rolle, bevor darauf der Gegenstand aufgelegt worden ist, gemäß der Erfindung;

Fig. 7 eine Rolle mit einem schwenkbaren Schild, nachdem darauf der Gegenstand aufgelegt worden ist, gemäß der Erfindung;

Fig. 8 eine Rolle mit einem schwenkbaren Schild mit unterer Stellung der Rolle beim rotierenden Gegenstand, gemäß der Erfindung.

Bevorzugte Ausführungsform der Erfindung

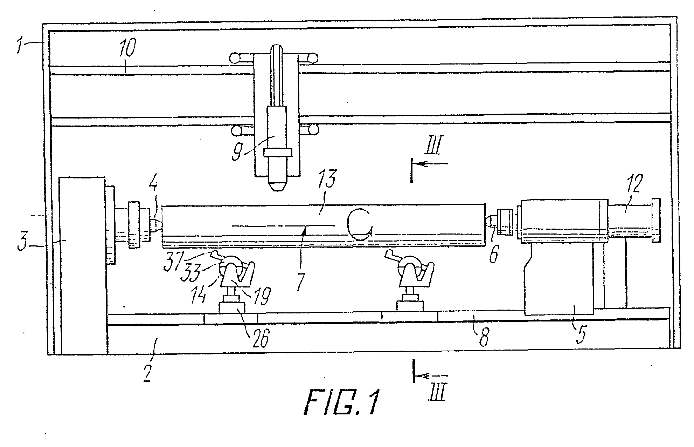

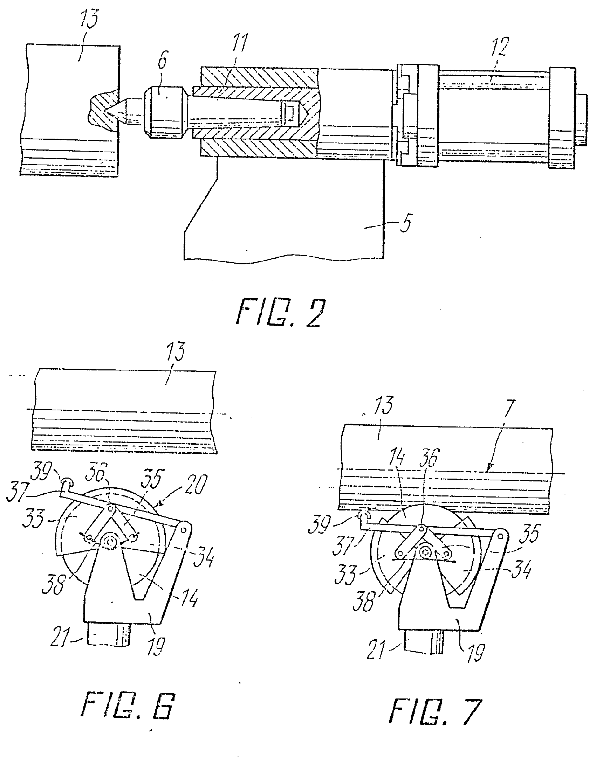

Die Vorrichtung zum Gaswärmebeschichten der Gegenstände vom Typ Rotationskörper hat eine Kammer 1 (Fig. 1), in welcher auf einem Grundrahmen 2 ein Spindelstock 3 mit einer Spindel 4 und ein Reitstock 5 mit einer laufenden, zur Achse 7 der Spindel 4 koaxialen Spitze 6 vorgesehen sind, wobei der Reitstock 5 auf dem Grundrahmen 2 entlang einer Führung 8 bewegbar und arretierbar angeordnet ist, und einen Zerstäuber 9, der auf in der Kammer 1 festgemachten Führungen 10 längs- und querverschiebbar gegenüber der Achse 7 der Spindel 4 gelagert ist. Die laufende Spitze 6 ist von einem Schlitten 11 (Fig. 2) getragen, der im Reitstock 5 längs der Achse 7 der Spindel 4 bewegbar gelagert und mit einem Antrieb 12 verbunden ist, der als Kraftzylinder ausgebildet ist, dessen Leistung für die axiale Verschiebung des Gegenstandes 13 (Fig. 1) zum Spindelstock 3 hin auf Rollen 14, die auf dem Grundrahmen 2 angeordnet sind, ausreicht. Jede Rolle 14 (Fign.3 bis 5) ist höhenverstellbar angeordnet und hat dafür eine Einrichtung 15. Die Oberfläche 16 der Rolle 14, die mit dem Gegenstand 13 in Wechselwirkung tritt, ist mit einem Baumwollstoff 17 oder einem anderen wasseranziehenden Material bedeckt, das die zum Beschichten vorbereitete Oberfläche des Gegenstandes 13 nicht beschädigt und auf dieser Oberfläche keine Fettflecke hinterläßt. Jede Rolle 14 ist auf einer Achse 18, die in einem Gehäuse 19 eingebaut ist, drehbar gelagert. Auf der Achse 18 sitzt auch ein schwenkbares Schild 20, das die Oberfläche 16 der Rolle 14 vor dem aufzusprühenden Material schützt. Das Gehäuse 19 der Rolle 14 sitzt auf einem Stab 21, der im Innern eines Bechers 22 koaxial damit angeordnet ist. Die Achse 23 des Stabes 21 und des Bechers 22 liegt in einer senkrechten Ebene, die die Achse 7 der Spindel 4 schneidet. Der Stab 21 ist im Becher 22 derart angeordnet, daß er zum Einstellen in diesem Becher 22 längs der Achse 23 verschoben werden kann. An der Seitenfläche des Stabes 21 ist eine Skalenteilung (nicht gezeigt) vorgesehen, an welcher die Höhenverstellung des Stabes 21 gegenüber dem Becher 22 beim Einstellen infolge verschiedener Durchmesser des Gegenstandes 13 abgelesen wird. Der Stab 21 hat einen Bolzen 24 und eine Arretierung 25 in Form einer kegelförmigen Büchse, welche seine senkrechte Lage gegenüber dem Becher 22 feststellen. Der letztere ist auf einem Schlitten 26 höhenverstellbar angeordnet, der auf der Führung 8 längs der Achse 7 zum Einstellen verschiebbar und arretierbar gelagert ist.

Die Einrichtung 15 zur Höhenverstellung der Rolle 14 befindet sich innerhalb der Führung 8 und enthält einen Tragbalken 27, der unterhalb der Stirnseiten 28 der Becher 22 entlang der Achse 7 angebracht ist, und einen Schlauch 29, der an eine Druckluftleitung angeschlossen und in einem Bett 30 angeordnet ist. An der Führung 8 sind Anschläge 31 zur Begrenzung des Aufwärtshubs des Tragbalkens 27 vorgesehen.

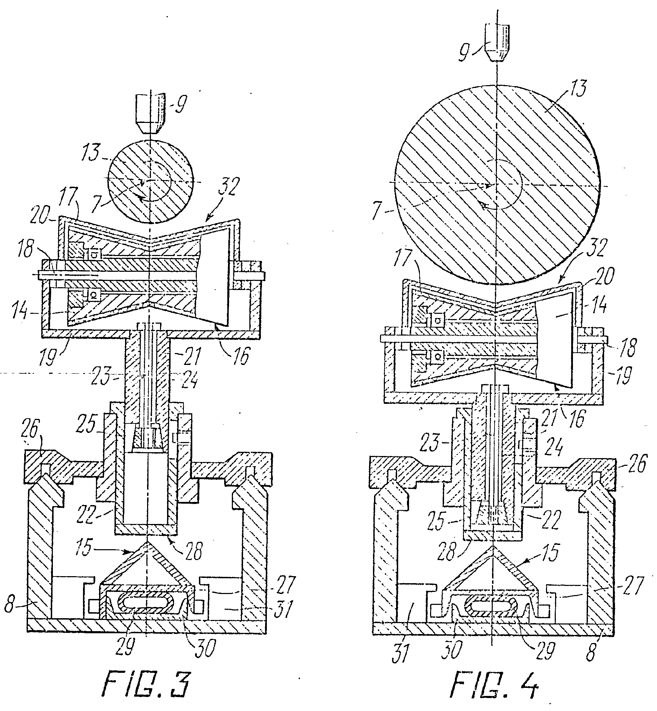

Das schwenkbare Schild 20 (Fign. 3 und 4) ist als hoh-

- 7 -

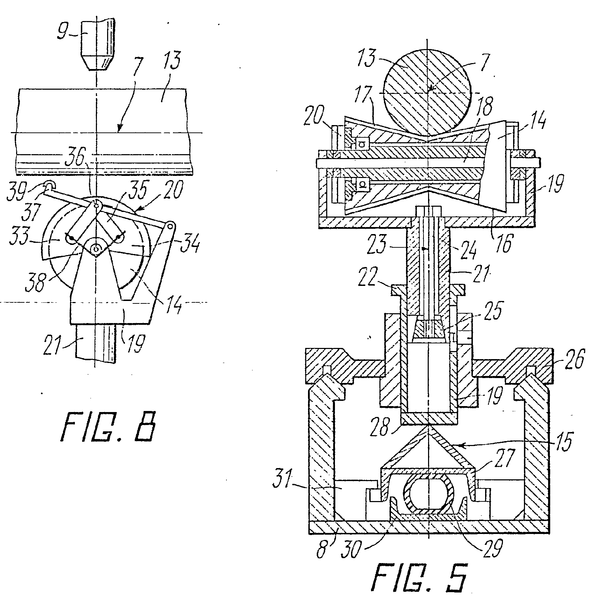

ler Rotationskörper ausgebildet, und die Abschirmfläche 32 des schwenkbaren Schildes 20 ist der Oberfläche 16 der Rolle 14 äquidistant. Das schwenkbare Schild 20 weist zwei gleiche Elemente 33 und 34 (Fign. 6 bis 8) auf, die symmetrisch gegenüber der Achse 18 der Rolle 14 angeordnet sind. Der summarische Winkel des Querschnittes der Elemente 33 und 34 beträgt mehr als 180°, so daß die Oberfläche 16 der Rolle 14 zuverlässig vor dem von oben aufzusprühenden geschützt wird. Die Elemente 33 und 34 sind an zwei Schäkeln 35 angelenkt, die ihrerseits mittels eines gemeinsamen Gelenkes 36 mit einer schwenkbaren Gabel 37 verbunden sind, die am Gehäuse 19 der Rolle 14 gelenkig gelagert ist. Die schwenkbare Gabel 37 ist mittels einer schwachen Feder 38 in Richtung zum Gegenstand 13 belastet. Der auskragende Teil 39 der schwenkbaren Gabel 37, der in Wechselwirkung mit dem Gegenstand 13 steht, ist mit einem Baumwollgewebe bedeckt, das dem Überzug 17 der Rolle 14 ähnlich ist.

Die Vorrichtung zum Gaswärmebeschichten der Gegenstände vom Typ Rotationskörper hat folgende Wirkungsweise.

Der Reitstock 5 (Fign. 1, 3 und 4) wird über die Führung 8 bewegt und in der Stellung arretiert, die durch die Länge des Gegenstandes 13 bestimmt wird; man verfährt auch die Schlitten 26 mit den Rollen 14 über die Führung 8 und arretiert diese in den Stellungen, die durch die Länge des Gegenstandes 13 bestimmt werden. Dann stellt man ausgehend vom Durchmesser des Gegenstandes 13 die senkrechte Ausgangslage der Rolle 14 ein. Dazu drückt man bei der unteren Stellung des Tragbalkens 27 und des Bechers 22 mit Hilfe des Bolzens 24 die Arretierung 25 weg, verschiebt den Stab 21 gegenüber dem Becher 22, wonach mittels des Bolzens 21 und der Arretierung 25' der Stab 21 im Becher entsprechend der Skalenteilung in einer durch den Durchmesser des Gegenstandes 13 bestimmten Stellung eingespannt wird. Die untere Ausgangsstellung des Stabes 21 und der Rolle 14 ist umso tiefer, je größer der Durchmesser des Gegenstandes 13 (Fign. 3 und 4) ist. Man beaufschlagt den Schlauch 29 mit Preßluft, und der Tragbalken 27 bewegt sich nach oben bis hin zu den Anschlägen 31. Beim Aufwärtshub des Tragbalkens 27 bringt dieser den Becher 22 und den Stab 21 mit der Rolle 14 in die obere Stellung. In dieser Stellung bleiben die Elemente 33 und 34 des schwenkbaren Schildes 20 durch die Belastung der Feder 38 (Fig. 6) zusammengedrückt, und die Gabel 37 ist gehoben. Nachdem der Zerstäuber 9 aus der Betriebsstellung weggeführt worden ist, setzt man den Gegenstand 13 auf die angehobenen Rollen 14 (Fig. 7) ab. Beim Absetzen des Gegenstandes 13 wird die Gabel 37 geschwenkt, wodurch die Elemente 33 und 34 des schwenkbaren Schildes 20 in entgegengesetzte Richtungen geschwenkt werden. Infolge dessen, daß die Ausgangsstellung der Stäbe 21 ausgehend von der Skalenteilung vorher bestimmt wurde, so legt sich die Drehachse des Gegenstandes 13, der auf den gehobenen Rollen 14 ruht, in die Achse 7 der Spindel 4 (Fig. 5). Man betätigt den Antrieb 12 für den Reitstock 5, wodurch der Kegel der laufenden Spitze 6 ins Körnerloch des Gegenstandes 13 eingeführt wird; anschließend wird der Gegenstand 13 mittels der laufenden Spitze 6 über die Rollen 14 zum Spindelstock 3 (Fign. 1, 2) bis an die Spindel 4 bewegt. Bei der Bewegung des Gegenstandes 13 über die Rollen 14 tritt dessen Oberfläche mit dem Baumwollgewebe 17 in Wechselwirkung, so daß mechanische Beschädigungen der für das Beschichten vorbereiteten Oberfläche sowie das Auftauchen von Fettflecken vermieden werden. Nach der Anordnung des Gegenstandes 13 in der Spindel 4 und in der laufenden Spitze 6 läßt man den Tragbalken 27 sinken, wonach die Rollen 14 ebenfalls niedergehen. Hierbei wird die Gabel 37 unter Einwirkung der Feder 38 nach oben geschwenkt, wobei die Elemente 33, 34 des schwenkbaren Schildes 20 wieder zusammengeführt werden (Fig. 8). Wenn die Rolle 14 die untere Stellung einnimmt, bildet sich zwischen der Wirkfläche der Gabel 37 und der Erzeugenden des Gegenstandes 13 ein Spalt. Man läßt den Zerstäuber 9 seine Betriebsstellung einnehmen, schaltet den Antrieb für die Spindel 4 ein, und der Zerstäuber 9 bewegt sich längs der Achse 7 der Spindel 4 und trägt auf die Oberfläche des rotierenden Gegenstandes 13 eine Schicht auf. Auf Grund dessen, daß während der Beschichtung die Elemente 33, 34

- 9 -

des schwenkbaren Schildes 20 zusammengeführt bleiben und der symmetrische Winkel deren Querschnittes über 180° ausmacht, schützt die Abschirmfläche 32 des Schildes 20 zuverlässig die Oberfläche der Rolle 14 und das Baumwollgewebe 17 vor dem aufzusprühenden Material. Nach Beendigung der Beschichtung stellt man den Antrieb für die Spindel 4 ab; der Zerstäuber 9 wird ebenfalls abgeschaltet und aus der Betriebsstellung weggeführt, und der Tragbalken 27 läßt die Rollen 14 wieder hochgehen, bis sie mit dem Gegenstand 13 in Berührung kommen. Hierbei werden die Elemente 33 und 34 des schwenkbaren Schildes 20 (Fig. 7) auseinandergeschwenkt.

Nachdem nun der Reitstock 5 der Vorrichtung zum Gaswärmebeschichten der Gegenstände vom Typ Rotationskörper mit dem Antrieb 12 zur axialen Verlagerung des Gegenstandes zum Spindelstock 3 hin ausgerüstet worden ist und auf dem Grundrahmen 2 der Vorrichtung die Rollen 14, die den Gegenstand 13 bei dessen axialer Verlagerung unterstützen und beim Beschichten nicht berühren, angeordnet worden sind, wird ein großformatiger Gegenstand mit einer Masse von über 20 kg leicht und schnell, ohne Anwendung von Handarbeit, im Spindel- und Reitstock angeordnet.

Dies erhöht die Leistung der technologischen Hilfsoperationen bei Vorrichtungen zum Gaswärmebeschichten der Gegenstände vom Typ Rotationskörper. Bei solcher Positionierung eines Gegenstandes großer Masse sind mechanische Beschädigungen der für das Gaswärmebeschichten vorbereiteten Oberfläche des Gegenstandes sowie die Bildung von Fettflecken auf ihr ausgeschlossen, so daß dadurch die Güte der Beschichtung verbessert wird.

Die schwenkbaren Schilde 20, die im Zuge des Gaswärmebeschichtens die Oberfläche der Rollen 14, die mit dem Gegenstand 13 zusammenwirken, zuverlässig abschirmen, tragen ebenfalls zur Funktionstüchtigkeit der Förderrollen 14 bei, indem deren geometrische Gestalt beibehalten und mithin der exakte axiale Vorschub des Gegenstandes bis hin zur Spindel 4 gesichert wird.

Gewerbliche Anwendbarkeit

Die Erfindung kann bei der Durchführung von technolo-

0349643

gischen Hilfsoperationen bei Vorrichtungen zum Auftragen
von beliebigen Werkstoffen auf Gegenstände vom Typ Rotationskörper in der Hütten- und der chemischen Industrie angewendet werden.

- 11 -

PATENTANSPRÜCHE

1. Vorrichtung zum Gaswärmebeschichten von Gegenständen vom Typ Rotationskörper mit einer Kammer (1), in welcher auf einem Grundrahmen (2) ein Spindelstock (3) mit einer Spindel (4) und ein Reitstock (5) mit einer laufenden, mit der Spindel (4) fluchtenden Spitze (6) angebracht sind, und einem auf einer Führung (8) verschiebbar angeordneten Zerstäuber (9), dadurch gekennzeichnet, daß die laufende Spitze (6) des Reitstockes (5) einen Antrieb (12) zur axialen Verschiebung des Gegenstandes (13) zum Spindelstock (3) hin besitzt und daß auf dem Grundrahmen (2) Rollen (14) angebracht sind, die den zu bewegenden Gegenstand (13) unterstützen und mit je einer Einrichtung (15) zur Höhenverstellung und je einem schwenkbaren Schild (20) zum Abschirmen der Oberfläche (16) der Rolle (14) vor dem aufzusprühenden Material ausgestattet sind.

2. Vorrichtung nach Anspruch 1, dadurch gekennzeichnet, daß das schwenkbare Schild (20) als hohler Rotationskörper ausgebildet ist, der aus zwei gleichen Elementen (33, 34) besteht, welche auf der Achse (18) der Rolle (14) symmetrisch angeordnet sind und deren summarischer Winkel des Querschnittes mehr als 180 ° beträgt.

3. Vorrichtung nach Anspruch 1 oder 2, dadurch gekennzeichnet, daß das schwenkbare Schild (20) zwei Schäkel (35) hat, die mittels eines gemeinsamen Gelenkes (36) mit einer federbelasteten Gabel (37), die mit dem Gegenstand (13) in Wechselwirkung steht, verbunden sind, wobei jeder Schäkel (35) an dem jeweiligen Element (33, 34) des schwenkbaren Schildes (20) angelenkt ist.

4. Vorrichtung nach Anspruch 1 oder 2, dadurch gekennzeichnet, daß die Abschirmfläche des schwenkbaren Schildes (20) zur mit dem Gegenstand (13) zusammenwirkenden Oberfläche (16) der Rolle (14) äquidistant gestaltet ist.

5. Vorrichtung nach Anspruch 1, dadurch gekennzeichnet, daß die mit dem Gegenstand (13) zusammenwirkende Oberfläche (16) der Rolle (14) mit einem wasseranziehenden Werkstoff zum Schutz der für das Beschichten vorbereiteten Oberfläche des Gegenstandes (13) bedeckt ist.

ABGEÄNDERTE PATENTANSPRÜCHE FÜR DIE INTERNATIONALE
ANMELDUNG PCT/SU 87/00153

1. Vorrichtung zum Gaswärmebeschichten von Gegenständen
vom Typ Rotationskörper      mit einer      Kammer (1), in
welcher auf einem Grundrahmen (2) ein Spindelstock (3) mit
einer Spindel (4) und ein Reitstock (5) mit einer laufenden, mit der Spindel (4) fluchtenden Spitze (6) angebracht
sind, und einem auf einer Führung (10) verschiebbar angeordneten Zerstäuber (9), dadurch gekennzeichnet, daß die
laufende Spitze (6) des Reitstockes (5) einen Antrieb (12)
zur axialen Verschiebung des Gegenstandes (13) zum Spindelstock (3) hin besitzt und daß auf dem Grundrahmen (2) Rollen
(14) angebracht sind, die den zu bewegenden Gegenstand (13)
unterstützen und mit je einer Einrichtung (15) zur Höhenverstellung und je einem schwenkbaren Schild (20) zum Abschirmen der Oberfläche (16) der Rolle (14) vor dem aufzusprühenden Material ausgestattet sind.

2. Vorrichtung nach Anspruch 1, dadurch gekennzeichnet, daß das schwenkbare Schild (20) als hohler Rotationskörper ausgebildet ist, der aus zwei gleichen Elementen
(33, 34) besteht, welche auf der Achse (18) der Rolle (14)
symmetrisch angeordnet sind und deren summarischer Winkel
des Querschnittes mehr als 180 $^{o}$ beträgt.

3. Vorrichtung nach Anspruch 1 oder 2, dadurch gekennzeichnet, daß das schwenkbare Schild (20)      zwei Schäkel
(35)    hat,        die mittels eines gemeinsamen Gelenkes
(36) mit einer federbelasteten Gabel (37), die mit dem Gegenstand (13) in Wechselwirkung steht, verbunden sind, wobei jeder Schäkel (35) an dem jeweiligen Element (33, 34)
des schwenkbaren Schildes (20) angelenkt ist.

4. Vorrichtung nach Anspruch 1 oder 2, dadurch gekennzeichnet, daß die Abschirmfläche des schwenkbaren Schildes (20) zur mit dem Gegenstand (13) zusammenwirkenden Oberfläche (16) der Rolle (14) äquidistant gestaltet ist.

5. Vorrichtung nach Anspruch 1, dadurch gekennzeichnet,
daß die mit dem Gegenstand (13) zusammenwirkende Oberfläche (16) der Rolle (14) mit einem wasseranziehenden Werkstoff zum Schutz der für das Beschichten vorbereiteten Oberfläche des Gegenstandes (13) bedeckt ist.

FIG.1

214

FIG. 2

FIG. 6

FIG. 7

FIG.3

FIG.4

*FIG. 8*

*FIG. 5*

# INTERNATIONAL SEARCH REPORT

International Application No PCT/SU 87/00153

**I. CLASSIFICATION OF SUBJECT MATTER** (if several classification symbols apply, indicate all) [6]

According to International Patent Classification (IPC) or to both National Classification and IPC

$IPC^4$: B 05 B 13/02

**II. FIELDS SEARCHED**

| Minimum Documentation Searched [7] | |
|---|---|
| Classification System | Classification Symbols |
| $IPC^4$ | B 05 B 13/00, 13/02, 15/04 |

| Documentation Searched other than Minimum Documentation to the Extent that such Documents are Included in the Fields Searched [8] |
|---|
| |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | SU, AI, 761023, (G.K. Oklov et al), 7 September 1980 (07.09.80), see column 3, lines 20-33, fig. 1-4 | I |
| Y | SU, AI, 959837, (Rostovsky-na-Donu nauchno-issledovatelsky institut tekhnologii mashinostroenia) 23 September 1982 (23.09.82), see column 3, lines 25-30, the claims, the drawing | I |
| Y | SU, AI, 770558, (G.K. Oklov), 20 October 1980 (20.10.80), see columns 3,4, the claims, fig. 1-3 | I-4 |
| A | SU, AI, 650662, (A.A. Shevchenko et al.) 9 March 1979, (09.03.79), see the claims, fig. 1-5 | I-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 24 June 1988 (24.06.88) | 1 September 1988 (01.09.88) |
| International Searching Authority | Signature of Authorized Officer |
| ISA/SU | |

Form PCT/ISA/210 (second sheet) (January 1985)